Europäisches Patentamt

European Patent Office

Office européen des brevets

(19)

(11) Veröffentlichungsnummer: **0 031 873**
**B1**

(12) **EUROPÄISCHE PATENTSCHRIFT**

(45) Veröffentlichungstag der Patentschrift:
15.02.84

(21) Anmeldenummer: 80105885.0

(22) Anmeldetag: 29.09.80

(51) Int. Cl.³: **F 16 H 1/22,** F 16 H 1/16

(54) **Motorische Antriebseinheit und deren Verwendung.**

(30) Priorität: 09.10.79 CH 9093/79

(43) Veröffentlichungstag der Anmeldung:
15.07.81 Patentblatt 81/28

(45) Bekanntmachung des Hinweises auf die Patenterteilung:
15.02.84 Patentblatt 84/7

(84) Benannte Vertragsstaaten:
DE FR GB IT

(56) Entgegenhaltungen:
CH - A - 113 791
DE - C - 883 380
FR - A - 2 213 436
FR - A - 2 251 233
GB - A - 260 566
US - A - 1 556 033

(73) Patentinhaber: **MASCHINENFABRIK BENNINGER AG, Fabrikstrasse, CH-9240 Uzwil (CH)**

(72) Erfinder: **Kofler, Wilhelm, Dammweg 2, CH-9240 Uzwil (CH)**

(74) Vertreter: **Hunziker, Jean, Patentanwaltsbureau Jean Hunziker Schulhausstrasse 12, CH-8002 Zürich (CH)**

## Motorische Antriebseinheit und deren Verwendung

Die vorliegende Erfindung betrifft eine motorische Antriebseinheit für Maschinen, mit einem, mit der Maschinenwelle drehverbindbaren Schneckenrad, in das eine Schneckenwelle eingreift, an der ein das Lastmoment am Schnekkenrad überwindender Antriebsmotor angreift.

In vielen Bereichen der Industrie werden Maschinen mit steuerbaren bzw. regelbaren Motorantrieben verwendet, um die Maschinen in wechselnden Rhythmen arbeiten zu lassen bzw. die Anpassung der Maschinen an rasch wechselnde Betriebsbedingungen zu ermöglichen.

Mehrheitlich werden hierfür Gleichstrom-Motoren verwendet, da diese relativ leicht steuerbar sind.

Gleichstrom-Motoren sind aber, insbesondere in höheren kW- Bereichen, vergleichsweise teuer.

Es ist nun Aufgabe der vorliegenden Erfindung, eine motorische Antriebseinheit für Maschinen zu schaffen, die bei vergleichsweiser Leistung und Steuerbarkeit eines Gleichstrom-Motors wesentlich kostengünstiger und zudem noch universeller anwendbar ist.

Dies wird bei der motorischen Antriebseinheit erfindungsgemäss dadurch erreicht, dass mit dem Schneckenrad eine weitere, von einem Steuermotor angetriebene, der Drehzahländerung an der Antriebseinheit dienende Schnekkenwelle in Eingriff steht, die mit dem Schnekkenrad ein selbsthemmendes Getriebe bildet.

Durch diese Massnahmen und insbesondere durch die Selbsthemmung am steuernden Schneckengetriebe ist es nunmehr möglich, an der motorischen Antriebseinheit einen relativ kleinen und billigen Gleichstrom-Motor, etwa einen sogenannten Universalmotor vorzusehen, da dieser nur noch die in der Praxis verbleibende Reibung sowie geringe Beschleunigungen überwinden muss; die notwendige Umfangskraft am Schneckenrad aber vom Antriebsmotor aufgebracht wird. Hierbei wird unter der Umfangskraft die positive Differenz zwischen dem Drehmoment am Antriebsmotor und dem entgegenwirkenden Last-Drehmoment am Schneckenrad verstanden. Geht diese Differenz gegen Null, was sich beispielsweise durch Proportionalregelung am Antriebsmotor erreichen lässt, so geht auch das erforderliche Drehmoment am steuernden Gleichstrom-Motor gegen Null, womit eine leistungslose Regelung der motorischen Antriebseinheit erreicht wird.

Eine solche Antriebseinheit weist zudem vergleichsweise ein geringes Volumen und ein geringes Gewicht auf.

Zwar zeigt die GB-A- Nr. 260 566 schon ein selbsthemmendes Schneckengetriebe an einer Getriebeanordnung zur Bewegung einer Last, bei welcher Anordnung aber das selbsthemmende Getriebe an der Welle des Antriebsmotors angreift, der über ein Stufengetriebe dem Verstellen einer Last dient. Hierbei wirkt das selbsthemmende Getriebe als Sperrvorrichtung und gestattet ein Verstellen der Last nur, wenn die Schneckenwelle motorisch oder von Hand verdreht wird, womit feinste Winkelverstellungen an der Last ermöglicht werden sollen.

Eine zweckmässige Ausgestaltung der motorischen Antriebseinheit kann weiter darin gesehen werden, dass das Schneckenrad und somit die ganze Antriebseinheit auf eine Lastwelle aufsteckbar ist.

Dies erlaubt, die motorische Antriebseinheit direkt auf eine Maschinen-Antriebswelle aufzusetzen ohne Verwendung von Zwischengetrieben, was besonders für Walzenanordnungen mit veränderlichem Abstand vorteilhaft ist.

Ferner ist die Verwendung der motorischen Antriebseinheit zur Bildung eines Mehrfachantriebes mit mindestens zwei solcher Antriebseinheiten vorteilhaft, wobei dann die Antriebsmotoren in Form von Hydromotoren aller Antriebseinheiten des Mehrfachantriebes an einer gemeinsamen Versorgungseinheit angeschlossen sind.

Beispielsweise Ausführungsformen des Erfindungsgegenstandes werden nachfolgend anhand der Zeichnung näher erläutert. Es zeigen:

Fig. 1 eine Schnittansicht einer erfindungsgemässen motorischen Antriebseinheit;

Fig. 2 eine Schnittansicht entlang der Schnittlinie II - II in Fig. 1; und

Fig. 3 eine schematische Darstellung eines Mehrfachantriebes mit drei Antriebseinheiten und einer gemeinsamen Versorgungseinheit für die Hydromotoren der Antriebseinheiten.

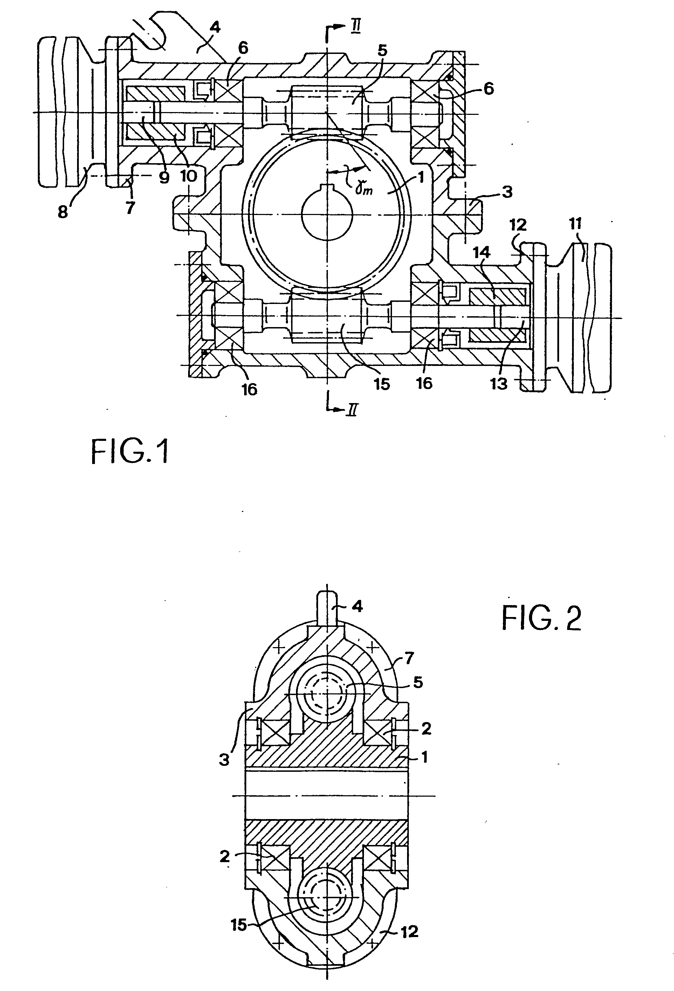

Die beispielsweise Ausführungsform einer motorischen Antriebseinheit gemäss den Figuren 1 und 2 umfasst ein Schneckenrad 1, welches aufsteckbar auf eine nicht näher gezeigte Maschinen-Antriebswelle ausgebildet ist. Hierfür stützt sich dieses Schneckenrad 1 über Lagermittel 2 an einem Gehäuse 3 ab (Fig. 2). Von diesem Gehäuse 3 ragt eine Drehmomentabstützung 4 ab.

Mit dem Schneckenrad 1 kämmt eine erste Schneckenwelle 5, welche sich ebenfalls über Lagermittel 6 am Gehäuse 3 abstützt. Diese Schneckenwelle 5 ragt einseitig in den Bereich eines Gehäuseflansches 7, an welchem ein Gleichstrom-Motor 8 angeflanscht ist, wobei die Welle 9 dieses Motors 8 und die Schneckenwelle 5 durch eine elastische Kupplung 10 miteinander verbunden sind.

Ein erfindungswesentliches Merkmal dieser vorbeschriebenen Anordnung ist nun, dass der Mittensteigungswinkel $m$ (Fig. 1) zwischen dem Schneckenrad 1 und der Steuer-Schneckenwelle 5 deren Reibungswinkel entspricht. Mit anderen Worten verhält sich diese Anordnung wie eine selbsthemmende Schraube in einem Träger, wobei der Steigungswinkel der Schraube dem lastabhängigen Reibungswinkel Schraube-Träger entspricht und wobei durch Drehen an der Schraube beliebig grosse Lasten absenkbar sind mit einem erforderlichen Drehmoment gegen Null. Vergleichsweise hierzu entspricht die Schneckenwelle 5 der Schraube, wobei die Schneckenwelle 5 vom Gleichstrom-Motor 8 die Drehung erhält. Die damit bewegbare Last ist die Umfangskraft am Schneckenrad 1, welche die positive Differenz zwischen einer am Schneckenrad 1 angreifenden Antriebskraft und der entgegenwirkenden Betriebslast, hier an der Maschinenwelle, darstellt. Wird hierbei die Antriebskraft am Schneckenrad 1 so gesteuert, dass die Umfangskraft möglichst klein bleibt, geht das erforderliche Drehmoment am steuernden Gleichstrom-Motor 8 gegen Null. Der Gleichstrom-Motor 8 kann somit sehr klein sein. Es hat sich gezeigt, dass hierfür übliche und kostengünstige Universalmotoren genügen, wobei die Steuerung bzw. Regelung dieser Motoren wie bisher erfolgen kann oder auch eine Vereinfachung erfahren kann, da die Steuerung nun praktisch leistungslos erfolgt.

Die genannte Antriebskraft kann natürlich beliebig auf das Schneckenrad aufgebracht werden. Ferner können hierfür unterschiedliche Energieformen zur Anwendung gelangen.

Beim Ausführungsbeispiel gemäss den Figuren 1 und 2 wird die Antriebskraft von einem Hydromotor 11 aufgebracht, der an einem weiteren Flansch 12 des Gehäuses 3 angeflanscht ist. Die Welle 13 dieses Hydromotors 11 ist über eine Kupplung 14 mit einer weiteren Schneckenwelle 15 verbunden, die sich über Lagermittel 16 am Gehäuse 3 abstützt und die als Antriebs-Schneckenwelle ebenfalls das Schneckenrad 1 kämmt.

Aus dem Vorbeschriebenen ergibt sich somit eine kompakte, einfach konzipierte und somit sehr kostengünstige motorische Antriebseinheit mit einem grossen Anwendungsbereich.

Motorische Antriebseinheiten gemäss der Erfindung und wie vorbeschrieben lassen sich insbesondere auch für Mehrfachantriebe verwenden.

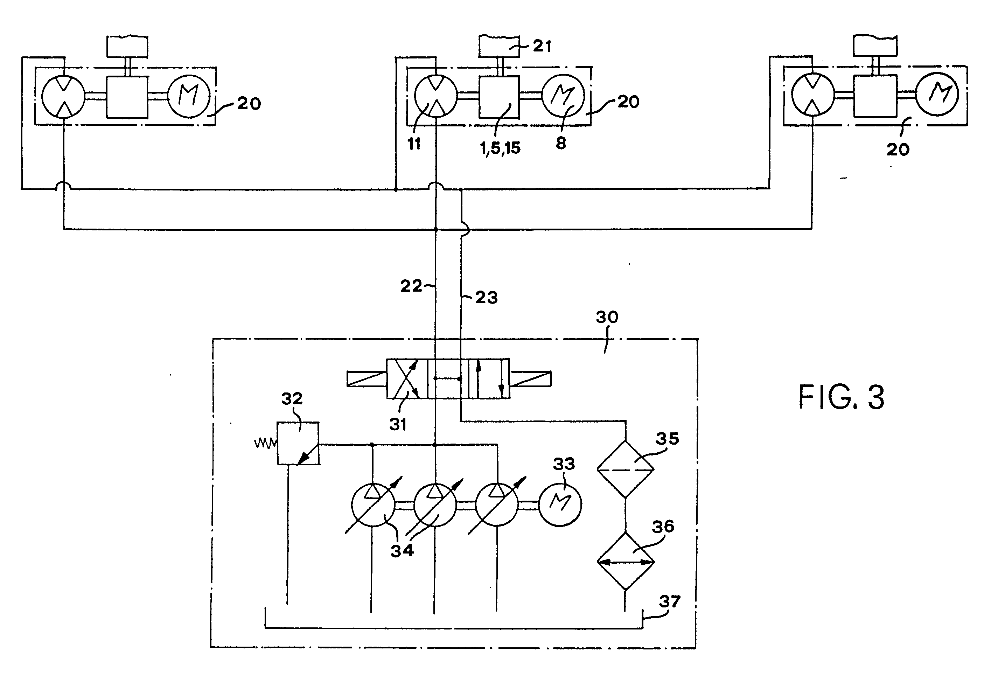

Ein solcher Mehrfachantrieb ist in Fig. 3 veranschaulicht. Bei diesem Mehrfachantrieb sind drei motorische Antriebseinheiten 20 vorgesehen, welche je das Schneckengetriebe 1, 5, 15; den Gleichstrom-Motor 8 und den Hydromotor 11 umfassen. Jede Antriebseinheit 20 treibt eine Walze 21 an.

Alle Hydromotoren 11 der Antriebseinheiten 20 sind hier über Vorleitungen 22 und Rückleitungen 23 an einer gemeinsamen Versorgungseinheit 30 angeschlossen.

Diese Versorgungseinheit 30 umfasst u. a. Wegeschieber 31, ein Druckbegrenzungsventil 32, von einem Motor 33 betriebene Verstellpumpen 34 sowie einen Ölfilter 35, einen Ölkühler 36 und den Tank 37.

Es ist leicht erkennbar, dass ein solcher Mehrfachantrieb eine besonders günstige Anwendung der erfindungsgemässen motorischen Antriebseinheit erlaubt.

## Patentansprüche

1. Motorische Antriebseinheit für Maschinen, mit einem, mit der Maschinenwelle drehverbindbaren Schneckenrad (1), in das eine Schneckenwelle (15) eingreift, an der ein das Lastmoment am Schneckenrad (1) überwindender Antriebsmotor (11) angreift, dadurch gekennzeichnet, dass mit dem Schneckenrad (1) eine weitere, von einem Steuermotor (8) angetriebene, der Drehzahländerung an der Antriebseinheit dienende Schneckenwelle (5) in Eingriff steht, die mit dem Schneckenrad (1) ein selbsthemmendes Getriebe bildet.

2. Motorische Antriebseinheit nach Anspruch 1, dadurch gekennzeichnet, dass der Antriebsmotor (11) ein Hydromotor ist.

3. Motorische Antriebseinheit nach Anspruch 1, dadurch gekennzeichnet, dass an der steuernden Schneckenwelle (5) ein Gleichstrom-Motor (8) angreift.

4. Motorische Antriebseinheit nach Anspruch 3, dadurch gekennzeichnet, dass der Gleichstrom-Motor (8) regelbar ist.

5. Motorische Antriebseinheit nach einem oder mehreren der vorangehenden Ansprüche 1 bis 4, dadurch gekennzeichnet, dass das Schneckenrad (1) und somit die ganze Antriebseinheit auf eine Lastwelle aufsteckbar ist.

6. Motorische Antriebseinheit nach einem oder mehreren der vorangehenden Ansprüche 1 bis 5, dadurch gekennzeichnet, dass sich das Schneckenrad (1) und die beiden Schneckenwellen (5, 15) in einem gemeinsamen Gehäuse (3) befinden, an welchem der Gleichstrom-Motor (8) und der Hydromotor (11) angeflanscht sind.

7. Verwendung der motorischen Antriebseinheit nach einem oder mehreren der vorangehenden Ansprüche 1 bis 6, zur Bildung eines Mehrfachantriebes mit mindestens zwei solcher Antriebseinheiten.

8. Verwendung nach Anspruch 7, dadurch gekennzeichnet dass die Hydromotoren (11) aller Antriebseinheiten (20) des Mehrfachantriebes an einer gemeinsamen Versorgungseinheit (30) angeschlossen sind.

## Claims

1. Motor-driven transmission for machines, comprising a worm wheel (1) capable of being connected for rotation with the machine shaft and engaged by a worm (15), to which is drivably connected a drive motor (11) overcoming the load moment at the worm wheel (1), characterized in that the worm wheel (1) is engaged by a further worm (5) which is driven by a control motor (8) and serves to vary the speed at the transmission, this further worm (5) forming a self-locking gear with the worm wheel (1).

2. Motor-driven transmission as claimed in claim 1, characterized in that the drive motor (11) is a hydraulic motor.

3. Motor-driven transmission as claimed in claim 1, characterized in that the controlling worm (5) is acted upon by a direct current motor (8).

4. Motor-driven transmission as claimed in claim 3, characterized in that the direct current motor is regulatable.

5. Motor-driven transmission as claimed in one or several of the preceding claims 1 to 4, characterized in that the worm wheel (1) and therewith the whole of the transmission is capable of being plugged onto a load shaft.

6. Motor-driven transmission as claimed in one or several of the preceding claims 1 to 5, characterized in that the worm wheel (1) and the two worms (5, 15) are located in a common housing to which are flanged the direct current motor (8) and the hydraulic motor (11).

7. Application of the motor-driven transmission as claimed in one or several of the preceding claims 1 to 6, for forming a multi-drive transmission with at least two such transmissions.

8. Application as claimed in claim 7, characterized in that the hydraulic motors (11) of all transmissions (20) of the multi-drive transmission are connected to a common supply unit (30).

**Revendications**

1. Transmission à moteur pour machines comprenant une roue hélicoidale pouvant être reliée pour tourner avec l'arbre de la machine et qui est engagée par un arbre à vis relié à entraînement à un moteur d'entraînement (11) surmontant le moment de charge à la roue hélicoidale (1), caractérisée en ce que la roue hélicoidale (1) est en engangement avec un arbre à vis (5) supplémentaire, qui est entraîné par un moteur de commande (8) et qui sert à varier la vitesse de rotation à la transmission, l'arbre à vis (5) supplémentaire formant, avec la roue hélicoidale (1), un engrenage autobloquant.

2. Transmission à moteur selon la revendication 1, caractérisée en ce que le moteur d'entraînement (11) est un moteur hydraulique.

3. Transmission à moteur selon la revendication 1, caractérisée en ce que l'arbre à vis (5) de commande est entraîné par un moteur à courant continu (8).

4. Transmission à moteur selon la revendication 3, caractérisée en ce que le moteur à courant continu (8) est réglable.

5. Transmission à moteur selon l'une ou plusieurs des revendications précédantes 1 à 4, caractérisée en ce que la roue hélicoidale (1) et, partant, la transmission entière est embrochable sur un arbre de charge.

6. Transmission à moteur selon l'une ou plusieurs des revendications précédantes 1 à 5, caractérisée en ce que la roue hélicoidale (1) et les deux arbres à vis (5, 15) se trouvent dans un boîtier commun (3) auquel sont flasqués le moteur à courant continu (8) et le moteur hydraulique (11).

7. Utilisation de la transmission à moteur selon l'une ou plusieurs des revendications précédantes 1 à 6, pour former une transmission multiple avec au moins deux de ces transmissions.

8. Utilisation selon la revendication 7, caractérisée en ce que les moteurs hydrauliques (11) de toutes les transmissions (20) de la transmission multiple sont reliés à une unité d'alimentation (30) commune.

FIG.1

FIG. 2

FIG. 3

0 031 873